# EUROPÄISCHE PATENTSCHRIFT

(11) **EP 3 339 733 B1**
(45) Veröffentlichungstag und Bekanntmachung des Hinweises auf die Patenterteilung: **13.11.2019**
(21) Anmeldenummer: 17455001.2
(22) Anmeldetag: 21.12.2017
(51) Int. Cl.: F23G 5/46, F23J 15/06

(54) **ANLAGE FÜR DIE RÜCKGEWINNUNG VON WÄRME**
PLANT FOR THE RECOVERY OF HEAT
INSTALLATION DE RÉCUPÉRATION DE CHALEUR

(30) Priorität: 21.12.2016 AT 511732016
(43) Veröffentlichungstag der Anmeldung: 27.06.2018
(73) Patentinhaber: HERZ Energietechnik GmbH, 7423 Pinkafeld (AT)
(72) Erfinder: FESHARAKI, Morteza, 8074 Raaba bei Graz (AT); GEREMIA, Silvio, 31033 Castelfranco Veneto (IT)
(74) Vertreter: Wildhack & Jellinek

(56) Entgegenhaltungen:
- DE-A1- 3 331 545
- US-A- 4 031 862

## Beschreibung

Bei einem Großteil der derzeit üblichen Biomassekessel für Großanlagen werden für die Wärmerückgewinnung aus den Verbrennungsgasen horizontale Wärmetauscher eingesetzt.

Die Größe und Art der Konstruktion der Wärmetauschers hängen von vielen Faktoren, wie z.B. von den Abmessungen der Brennkammer, dem Brennmaterial, der Regelung der Verbrennungsluft usw. ab.

So ist z.B. aus US 4031862-B eine Wärmerückgewinnungsanlage mit einer Vielzahl an von heißen Verbrennungsgasen umströmten Wärmetauschrohren jeweils mit Innenrohr aus Cu, einem Außenrohr aus einem Glas und Grafit zwischen den beiden Rohren bekannt, wobei das Innenrohr von Wasser durchströmt wird.

Die DE 3331545-A1 betrifft ein Verfahren und eine Anlage zum Vermindern der Schadstoffemissionen in Rauchgasen von Feuerungsanlagen mit einer ersten, mit Luftüberschuss betriebenen Feuerungsanlage und einer zweiten Feuerungsanlage, mit Nachverbrennung in stöchiometrischen Bereich unter Verbrauch des Restsauerstoffs auf. Die aus derselben austretenden Rauchgase enthalten jedoch Kohlenwasserstoffe, Kohlenmonoxyd, Stickoxyde, Schwefeldioxyd und Schwefeltrioxyd. Diese Schadstoffe werden mittels Katalysatoren zu CO₂, N₂, Wasserdampf und Schwefeltrioxyd/Schwefelsäure umgesetzt.

In den meisten Fällen sind die bei Verbrennungsanlagen eingesetzten Wärmetauscher als Zwei-Zug-Modelle, also mit zwei voneinander getrennten - meist nacheinander von den heißen Verbrennungsgasen zu durchströmenden - Rohrbündeln ausgeführt.

Bei der Wärmeübergangsberechnung solcher Zwei-Zug-Wärmetauscher erfolgt im ersten Zug des Wärmetauschers ein Wärmeübergang im Bereich von 70 bis 80 % und im zweiten Zug werden im Schnitt lediglich 20 bis 25 % abgegeben. Der Grund hierfür liegt in der hohen Temperaturdifferenz zwischen Verbrennungsgas und Wärmemedium im ersten Rohrzug, die selbstverständlich im zweiten Rohrzug wesentlich geringer ist.

Bei dieser an sich durchaus effektiven Art des Einsatzes von Wärmetauschern besteht die Gefahr, dass im letzten Bereich des zweiten Rohrzugs Kondensat gebildet wird und sich auf den Rohren niederschlägt, was jedoch gezielt zu vermeiden ist.

Insgesamt bedeutet diese Tendenz, dass insbesondere im Teillastbetrieb Einschränkungen bestehen, da die Verhinderung der Bildung von Kondensat im Wärmetauscher immer zu beachten ist, was zur Folge hat, dass die Effizienz der Wärmetauscheinrichtung gemindert wird, was selbstverständlich unerwünscht ist.

Die vorliegende Erfindung betrifft eine neue Anlage für die Gewinnung bzw. Rückgewinnung der bei Verbrennung von brennbaren Kohlenstoff enthaltenden, gegebenenfalls biologischen, Materialien generierten Hitzeenergie aus den Verbrennungsgasen mit einem mit den genannten brennbaren Materialien zu versorgenden Verbrennungsofen mit Zufuhr von Verbrennungsluft und an denselben angeschlossener Führung der heißen Verbrennungsgase in und durch die jeweilige Hitze- bzw. Wärmerückgewinnungseinrichtung.

Bei Verbrennungsöfen, welche mit brennbaren Materialien beschickt werden, die ganz unterschiedliche Gehalte an verbrennbarer Substanz und/oder brennfähigen, chemischen Elementen, wie insbesondere Kohlenstoff und Wasserstoff, sowie nicht brennbaren Komponenten enthalten, sind die bei deren Verbrennung erzielbaren Energiewerte, insbesondere Heizwerte, gänzlich unterschiedlich hoch.

Es seien an dieser Stelle nur beispielhaft die Verbrennung von getrocknetem Holz, Hackgut, Braunkohle und gegebenenfalls auch von luftgetrockneten Tierexkrementen genannt.

Die vorliegende Erfindung hat sich nun die Aufgabe gestellt, eine Hitze- bzw. Wärmerückgewinnungsanlage zu schaffen, mittels welcher die unterschiedlich hohen Energiegehalte der aus den unterschiedlichsten brennbaren Materialien stammenden Verbrennungsgase, jeweils an das zur Verbrennung gelangende Material angepasst, möglichst optimal nutzbar sind.

Hierbei kommen je nach Bedarf und auch z.B. je nach erzielbarem Preis insbesondere die direkte Nutzung der Wärmeenergie als solche für die verschiedensten Zwecke in Industrie, Fernwärmeversorgung, Sozialeinrichtungen, Wohnungen u. dgl. und die indirekte Nutzung der in den aus einem jeweiligen Verbrennungsprozess kommenden, heißen Verbrennungsgasen enthaltenen, thermischen Energie durch Umwandlung derselben in elektrische Energie, beispielsweise für den Eigenbedarf oder, wenn überschüssig, für die Einspeisung in ein Stromnetz in Frage.

Entscheidend ist hierbei die Menge und insbesondere die Temperatur der im Zuge des Verbrennungsprozesses generierten Verbrennungsgase und deren Wärmeenergiegehalt. Sind der Energieinhalt und insbesondere die Temperatur der aus dem Verbrennungsofen kommenden Gase hoch, so ist die Gefahr des Auftretens von Kondensation innerhalb der Wärmerückgewinnungseinrichtung äußerst gering bzw. nicht gegeben und es können sowohl alle Rohrzüge der Wärmetausch-Einrichtung in ihrer Gesamtheit und zusätzlich noch eine vorhandene Verdampfereinheit für einen Stromgenerator mit Wärme versorgt werden, ohne dass Kondensation in einer solchen Anlage eintritt.

Sind die Verbrennungsgastemperaturen weniger hoch und ist der Energieinhalt der Verbrennungsgase geringer, so ist es opportun, den Wärmetauscher nur zu einem Teil zu nutzen, und damit hat das aus dem "Teil-Wärmetauscher" abströmende Verbrennungsgas dann noch eine so hohe Temperatur, dass der Verdampfer mit Turbine für den Stromgenerator ausreichend mit Heizenergie versorgbar ist und die (wärme-)technisch genutzten Verbrennungsgase dann abgeführt werden können, und keine Kondensation auftritt.

Bei relativ niedrigen Temperaturen und Energieinhalten der aus dem Verbrennungsofen kommenden, heißen Gase kann das Ziel der Vermeidung von Kondensation in der Hitze bzw. Wärmerückgewinnungsanlage durchaus noch erreicht werden, indem nur mehr die Wärmetauscheinrichtung genutzt wird.

Die Aufgabe der Erfindung besteht nun im Einzelnen darin, eine einzige Einrichtung oder Zusatz- bzw. Nachrüsteinrichtung zu schaffen, mittels welcher die wie oben angeführten, je nach anfallender Temperatur und Wärmeenergieinhalt der aus einer Verbrennungsanlage beliebiger Art kommenden, heißen Verbrennungsgase optimal genutzt werden können.

Gegenstand der vorliegenden Erfindung ist somit eine wie eingangs genannte Anlage für die Rückgewinnung der bei Verbrennung von brennbaren, Kohlenstoff enthaltenden, gegebenenfalls biologischen, Materialien generierten Hitzeenergie aus den Verbrennungsgasen, und an denselben angeschlossener Führung der heißen Verbrennungsgase in und durch eine Hitze- bzw. Wärmerückgewinnungseinrichtung, - welche mit einem Rohrwärmetauscher gebildet ist, welcher einen durch eine Rohrbündel-Trennwand in zwei Rohrzüge, insbesondere längs, geteilten Rohrbündelkörper mit von den direkt aus dem Verbrennungsofen abströmenden heißen Verbrennungsgasen nacheinander durchströmbarem erstem und zweitem Rohrzug und einen direkt an den Rohrbündelkörper anschließenden und die beiden Rohrzüge miteinander verbindendem Rauchrohr-Verbindungsraum mit denselben teilender Verbindungsraum-Trennwand, und einem in demselben angeordneten, vorzugsweise an eine außerhalb des Rohrwärmetauschers angeordnete Turbine mit Stromgenerator angeschlossenen, Rohr-Verdampfer aufweist,
- wobei die Hitze- und Wärmerückgewinnungseinrichtung weiters eine vom Rauchrohr-Verbindungsraum ausgehende und in einen ausgangsseitig nur an den zweiten Rohrzug des Rohrwärmetauschers anschließenden Rauchgas-Abzugsraum mit Abgas-Abführungsöffnung mündende Zweit-Rohrzugsumgehungs- bzw. Bypass-Rohrleitung mit in ihrem, vom Rauchrohr-Verbindungsraum ausgehenden Rohrast eingebauter, öffen- oder schließbarer Sperrklappe, aufweist und
- wobei an die Verbindungsraum-Trennwand im Rauchrohr-Verbindungsraum wärmetauscherseitig eine
- entweder in eine die dortige Rauchgas-Direktführungsöffnung im Wesentlichen gasdicht schließende und damit die Führung der Verbrennungsgase
- aus dem ersten Rohrzug durch den gesamten Rauchrohr-Verbindungsraum und jedenfalls über den in demselben angeordneten Rohr-Verdampfer in den zweiten Rohrzug oder in die Bypass-Rohrleitung gewährleistende Trennwands-Verbindungsposition zur Rohrbündel-Trennwand des Rohrwärmetauschers hin
- oder in eine die Führung der Verbrennungsgase vom ersten Rohrzug durch den gesamten Rauchrohr-Verbindungsraum und über den sich dort befindlichen Rohr-Verdampfer verhindernde und somit deren Führung gleich durch die geöffnete Rauchgdirektführungsöffnung direkt in und durch die Bypass-Rohrleitung oder in und durch den zweiten Rohrzug gewährleistende Sperrposition verschwenkbare Zweiwege-Sperrklappe angelenkt ist.

Mit der vorliegenden Erfindung, die als "combined circle" zu bezeichnen ist, können Strom und Wärme gleichzeitig produziert werden, und zwar in jeweils auf Temperatur und pro Zeiteinheit enthaltener Wärmemenge der aus einem jeweiligen Verbrennungsofen kommenden Verbrennungsgase abgestimmt.

Der "combined circle" ist sowohl als Nachrüstsystem in schon bestehende Wärmerückgewinnungsanlagen, als auch für derartige Neuanlagen einsetzbar.

Der Verdampfer für die Versorgung einer außen liegenden Stromerzeugungsanlage ist im sozusagen eine Art Abgaskanal bildenden Rauchrohr-Verbindungsraum implementiert, einerseits um die in den Verbrennungsgasen enthaltene Energie höchstmöglich zu nutzen, und andererseits, um gleichzeitig zwei unterschiedliche Energieformen, nämlich Wärme- und elektrische Energie, zu erzeugen und zu nutzen.

Der "combined circle" ist bzw. wird direkt an die Anlage installiert.

Den wesentlichen Teil des neuen Systems bildet der Rauchrohr-Verbindungsraum, durch welchen der zweite mit dem ersten Rohrzug des Rohrwärmetauschers verbunden ist, in welchem der Verdampfer für den Stromgenerator eingebaut ist, und welcher je nach Stellung der dortigen, schwenkbaren Zweiwege-Sperrklappe insgesamt oder nur auf kürzestem Weg von den Verbrennungsgasen durchströmbar ist.

Durch einfaches Schwenken der Zweiwege-Sperrklappe ist eine rasche Umschaltung zwischen Wärme- und Stromerzeugungs-Kombibetrieb und reinem Wärmebetrieb ermöglicht. Je nach Bedarf kann also die Anlage auf Strom- und Wärmebetrieb oder auf reinen Wärmebetrieb geschaltet werden.

Im Strom- und Wärmebetriebsmodus wird die Sperrklappe in die die Verbrennungsgas-Direktführungsöffnung im Rauchrohr-Verbindungsraum verschließende Stellung gebracht. Dadurch strömt das Rauchgas nach Verlassen des ersten Rohrzugs über den Verdampfer und das darin vorhandene Fluidmedium wird in hochgespannten Dampf für eine den Stromgenerator treibende Turbine umgewandelt. Die so "abgearbeiteten" Verbrennungsgase können durch das Bypass-Rohr oder durch den zweiten Rohrzug des Rohrwärmetauschers weitergeleitet werden.

Bei der Umlenkung der Verbrennungsgase in und durch den zweiten Rohrzug kann zusätzlich weiters eine Wärmeübertragung stattfinden, soweit dies die verbleibende Verbrennungsgastemperatur zulässt.

Ist dieselbe zu niedrig, wodurch der Taupunkt unterschritten werden könnte, werden die Verbrennungsgase unter Umgehung des zweiten Rohrzugs gleich durch das Bypass-Rohr geleitet.

Im reinen Wärmebetriebsmodus wird die Sperrklappe auf die Rauchrohr-Verbindungsraum-Sperrposition gebracht, womit der Wärme-/Strom-Kombinationsprozess umgangen bzw. ausgeschaltet wird und eben nur ein Normal-Wärmebetrieb stattfindet. Durch die erfindungsgemäß vorgesehene Zweipositions- bzw. Zweiwege-Sperrklappen-Umschaltung ist der Kombinationsprozess auch während des weiter laufenden Wärmebetriebsmodus der Anlage, beispielsweise für nötige Wartungsarbeiten, zugänglich.

Der Einsatz des neuen "combined circle" ist bei allen bestehenden sowie neuen Biomassenkesseln mit horizontalen oder vertikalen Zwei-Zug-Wärmetauschern ermöglicht. Insbesondere bei Anlagen im Fernwärmebereich arbeitet der Kessel großteils im Teillastbetrieb.

Durch die erfindungsgemäße Nachrüstung bzw. den Einsatz dieser Neuentwicklung kann die Gesamteffizienz der Anlage gesteigert werden, da auch im Teillastbetrieb Strom unter Einsatz des Verdampfers im Rauchrohr-Verbindungsraum produziert werden kann. Bei dieser Art der Führung des neuen Wärme- und Stromerzeugungs-Kombinationsprozesses können bis zu 15 % der thermischen Leistung des Wärmetauschers in wertvollen elektrischen Strom umgewandelt werden.

Infolge ihres an sich einfachen Baus kann die neue Verbrennungswärme-Rückgewinnungsanlage im Zuge eines Um- bzw. Nachrüstprozesses einer Kesselanlage relativ problemlos in gleicher Weise in schon bestehende Verbrennungs- und Hitzerückgewinnungsanlagen integriert werden, um dieselben wärmetschnisch zu optimieren oder aber es können auch neu zu erstellende derartige Anlagen von vornherein damit ausgestattet werden.

Im Speziellen kann - was die Kombination von wie oben beschriebener, erfindungsgemäßer Hitze- und Wärme-Rückgewinnungsanlage und Verbrennungsofen, insbesondere im Falle des Einsatzes von natürlichem Brennmaterial mit oft geringeren Gehalten an brennbarer Substanz betrifft - die Anlage so konzipiert sein, dass die Hitze- bzw. Wärmerückgewinnungseinrichtung mit einem direkt an der Decke des Brennofens anliegenden oder selbst einen Teil derselben bildenden, horizontal angeordneten Rohrwärmetauscher gebildet ist, dessen Rauchrohr-Verbindungsraum einen nach abwärts gerichteten, mit Asche- und/oder Staubaustragungseinheit ausgestatteten, Konus aufweist, und wobei weiters vorgesehen ist, dass als Verbrennungsofen ein solcher eingesetzt ist, wie er aus dem zweiten Teil des **Anspruchs** 2 hervorgeht.

Es sei an dieser Stelle ausdrücklich klargestellt, dass der genannte Verbrennungsofen selbst nicht Gegenstand der Erfindung ist, sondern nur in Kombination mit der neuen erfindungsgemäßen Hitze- bzw. Wärmerückgewinnungsanlage.

Je nach Art und Menge des dem Verbrennungsofen zugeführten Brennmaterials, Art der Ofenkonstruktion, Verbrennungsführung, Isolierung von Ofen und Verbrennungsluftzuführung und je nach Umständen auf der Wärmenutzerseite sind unter Einsatz einer der beiden vorbeschriebenen Arten von Verbrennungs- und Wärmerückgewinnungsanlagen folgende drei Verfahrens-Modi ermöglicht, welche sich durch auf einander abgestimmtes Verstellen von zwei, den Durchzug der heißen Verbrennungsgase durch die verschiedenen Bereiche der neuen Anlage jeweils in vorteilhafter Weise bzw. Kombination jeweils entweder ermöglichenden und/oder verhindernden Sperrorganen, also insbesondere Sperrklappen, voneinander unterscheiden.

Demgemäß ist bei insgesamt ausreichender/m oder insbesondere mehr als ausreichender/m Temperaturhöhe und Energiegehalt der Verbrennungsgase ein Verfahren in einem Volllast-, d.h. Strom- plus Vollwärmegewinnungsmodus in einer ersten Vorgangsweise günstig, gemäß welcher - bei die Rohrbündel-Trennwand im Wärmetauscher und die Verbindungsraum-Trennwand unter Verschließung der Verbrennungsgas-Direktführungsöffnung im Rauchrohr-Verbindungsraum miteinander verbindender Stellung der Zweiwege-Sperrklappe, und bei gleichzeitig geschlossener Bypass-Sperrklappe in der Bypass-Rohrleitung sowohl der erste Wärmetauscher-Rohrzug als auch der gesamte Rauchrohr-Verbindungsraum und der dort angeordnete Rohr-Verdampfer sowie der zweite Wärmetauscher-Rohrzug nacheinander von den aus dem Verbrennungsofen kommenden heißen Verbrennungsgasen durch- bzw. überströmt werden, und die Abgase nach Durchströmen des an den zweiten Wärmetauscher-Rohrzug anschließenden Rauchgas-Abführungsraums durch dessen Abgas-Abführungsöffnung, abgeführt bzw. beispielsweise einer Abgasreinigungsanlage zugeführt werden.

Sind Temperaturen und Wärmeinhalt der Verbrennungsgase nicht so hoch, ist das Wärmerückgewinnungsverfahren in einem Zweidrittellast-, d.h. Strom- plus Teil-Wärmegewinnungsmodus durchführbar, indem bei die Rohrbündel-Trennwand und die Verbindungsraum-Trennwand - unter Verschließung der Verbrennungsgas-Direktführungsöffnung im Rauchrohr-Verbindungsraum - miteinander verbindender Stellung der Zweiwege-Sperrklappe, und bei geöffneter Bypass-Sperrklappe des Bypassrohrs nur der erste Wärmetauscher-Rohrzug und danach nur mehr der gesamte Rauchrohr- Verbindungsraum und der dort angeordnete Rohr-Verdampfer von den aus dem Verbrennungsofen abströmenden heißen Verbrennungsgasen durch- bzw. überströmt werden, wonach dieselben bei geöffneter Bypass-Sperrklappe nur mehr in und durch die Bypass-Rohrleitung und durch den Rauchgas-Abführungsraum und dessen Abgas-Abführungsöffnung geführt bzw. abgeführt werden.

Bei noch geringerem bzw. eben geringem Temperatur- und Energie-Gehalt, beispielsweise bei Verbrennungsgasen aus mit Tierexkrementen beschickten Verbrennungsöfen, ist schließlich eine Verfahrensführung in einem Drittellast-, d.h. nur Teil-Wärmegewinnungsmodus von Vorteil, welche dadurch gekennzeichnet ist, dass bei - nach Abschwenken der Zweiwege-Sperrklappe - geöffneter Verbrennungsgas-Direktführungsöffnung und in Folge der dadurch eintretenden Verhinderung der Führung der Verbrennungsgase durch den gesamten Rauchrohr-Verbindungsraum und damit über den in demselben angeordneten Rohr-Verdampfer und bei gleichzeitig geschlossener Bypass-Sperrklappe die aus dem Verbrennungsofen abströmenden, heißen Verbrennungsgase nur sowohl durch den ersten Wärmetauscher-Rohrzug als auch durch den zweiten Wärmetauscher-Rohrzug sowie letztlich durch den Rauchgas-Abzugsraum und dessen Abgas-Abführungsöffnung geführt bzw. abgeführt werden.

Anhand der Zeichnungen wird die Erfindung näher erläutert:

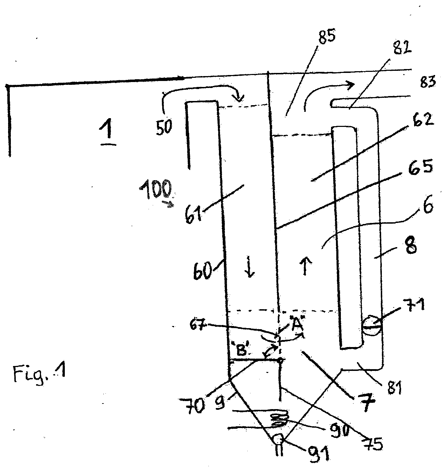

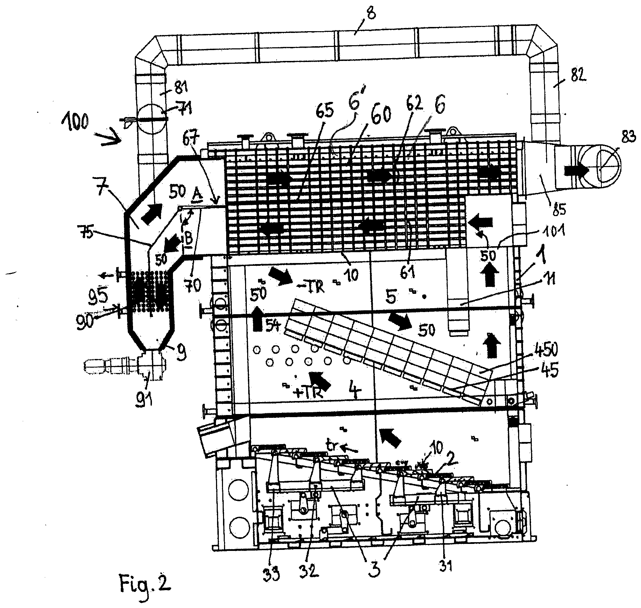

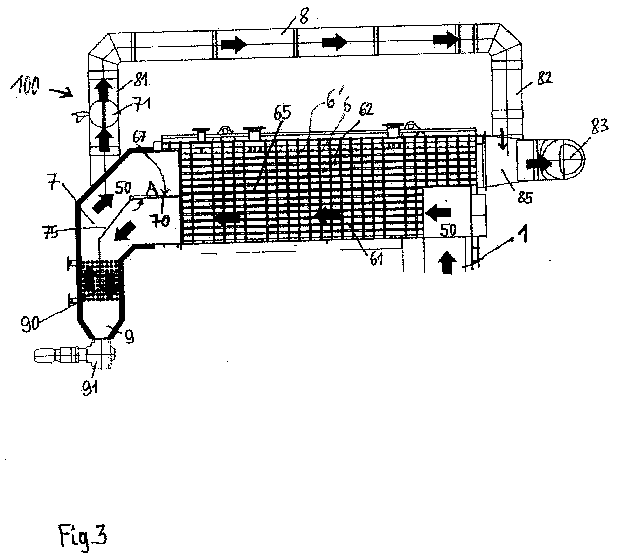

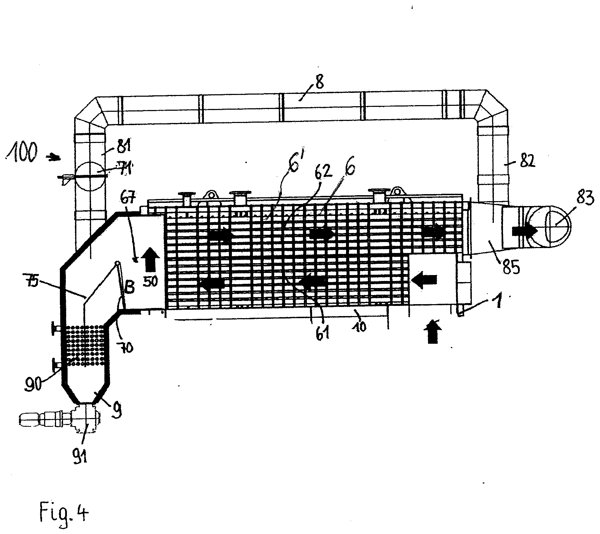

Die Fig. 1 zeigt schematisch eine von der Bauweise und Art des Verbrennungsofens unabhängige, an einen beliebigen, derartigen Ofen angeschlossene, erfindungsgemäße Wärmerückgewinnungsanlage mit einem Vertikal-Wärmetauscher, die Fig. 2 erläutert einen erfindungsgemäß gebauten oder nachgerüsteten Horizontal-Wärmetauscher mit entsprechenden, übrigen, zusätzlichen Anlagenteilen und einen die nutzbaren Verbrennungsgase liefernden, speziellen Verbrennungsofen für die Verbrennung von organischem Material, wie insbesondere Tierextrementen, wobei die Verbrennungsgase hohe Temperatur und hohen Wärmeenergiegehalt aufweisen und die Wärmetauscheinrichtung demgemäß geschaltet ist, und die Fig. 3 und 4 die Stellungen der Sperrorgane von gleich gebauten, Horizontal-Wärmetauschern, wenn mittlere bzw. geringe Temperaturhöhen bzw. Energieinhalte der aus dem Verbrennungsofen abziehenden Verbrennungsgase zu erwarten sind. Selbstverständlich ist die vorliegende Erfindung nicht auf die gezeigten Beispiele beschränkt.

Die Fig. 1 zeigt schematisch eine Wärmerückgewinnungsanlage 100 mit einer an einen beliebigen Verbrennungsofen 1 angeschlossenen Hitze- bzw. Wärmerückgewinnungseinrichtung 6', hier mit Vertikal-Wärmetauscher 6 mit Rohrbündelkörper 60 mit durch eine Rohrbündel-Trennwand 65 voneinander getrennten erstem und zweitem Rohrbündel 61, 62, wobei im Betriebszustand dieser Einrichtung 6' das erste Rohrbündel 61 immer zuerst von den heißen Verbrennungsgasen 50 aus dem Verbrennungsofen 1 durchströmt wird.

Die beiden Rohrbündel 61, 62 sind zueinander gegenläufig zu durchströmen und stehen über den Rauchrohr-Verbindungsraum 7 mit hier konischem Unterteil 9 mit Asche- und/oder Staubaustragseinheit 91 und in demselben angeordneter, an eine außerhalb der Hitze- bzw. Wärmetauscheinrichtung 6' angeordnete, nicht näher gezeigte Turbine mit Stromgenerator angeschlossener Verdampferspirale des Rohr-Verdampfers 90 miteinander in Verbindung.

Von dem Rauchrohr-Verbindungsraum 7 geht eine etwa C-förmige Gesamtgestalt aufweisende, das zweite Rohrbündel 62 umgehende Bypass-Rohrleitung 8 mit Rohrästen 81, 82 aus, die in den an dieses zweite Rohrbündel 62 ausgangsseitig anschließenden Rauchgas-Abführraum 85 mündet und in welcher Bypass-Rohrleitung 8 sich relativ nahe zum Rauchrohr-Verbindungsraum 7 eine für eine mögliche Sperre der Bypass-Rohrleitung 8 vorgesehene Bypass-Sperrklappe 71 befindet.

In dem Rauchrohr-Verbindungsraum 7 ist eine denselben teilende Verbindungsraum-Trennwand 75 angeordnet, an welche eine entweder in eine Trennwand-Verbindungsposition A zur Rohrbündel-Trennwand 65 hin schwenkbare und hierbei die Verbrennungsgas-Direktführungsöffnung 67 verschließende oder aber in eine den Zugang der das erste Rohrbündel 61 verlassenden Verbrennungsgase zum Verdampfer 90 sperrende Position B verschwenkbare und damit die Verbrennungsgas-Direktführungsöffnung 67 öffnende Zweiwege-Sperrklappe 70 angelenkt ist.

Durch die an den Rauchgas-Abführungsraum 85 anschließende Abgas-Abführungsöffnung 83 gelangen die die erfindungsgemäße Hitze- bzw. Wärmerückgewinnungseinrichtung 6' letztlich verlassenden, ihren Wärmeenergieinhalt abgeliefert habenden Verbrennungsabgase beispielsweise in eine Abgasbehandlungs- und -reinigungsanlage und letztlich dann in die Umwelt.

Die aus der Fig. 2 hervorgehende erfindungsgemäß vorgesehene Wärmerückgewinnungseinrichtung 6' umfasst einen direkt an der Decke 10 eines speziellen Verbrennungsofens 1 anliegenden oder selbst einen Teil derselben bildenden, horizontal angeordneten Rohrwärmetauscher 6 mit Rohrbündelkörper 60, welcher einen durch die Rohrbündel-Trennwand 65 in zwei Rohrzüge 61, 62 längs geteilten Rohrbündelkörper 60 mit von den aus dem Verbrennungsofen 1 abströmenden heißen Verbrennungsgasen 50 durchströmbarem erstem und zweitem Rohrzug 61, 62, einen - hier links - direkt an den Rohrbündelkörper 60 anschließenden und die beiden Rohrzüge 61, 62 miteinander verbindenden Rauchrohr-Verbindungsraum 7 mit denselben teilender Verbindungsraum-Trennwand 75, einen im Rauchrohr-Verbindungsraum 7 angeordneten, an eine außerhalb dieses Rauchrohr-Verbindungsraums 7 angeordnete Turbine mit nicht näher gezeigtem Stromgenerator 95 angeschlossenen, Rohr-Verdampfer 90 und einen nach abwärts gerichteten, mit einer Asche- und/oder Staubaustragungseinheit 91 versehenen, konischen Unterteil 9.

Die Anlage umfasst weiters die vom Rauchrohr-Verbindungsraum 7 ausgehende und in den am zweiten Rohrzug 62 des Rohrwärmetauschers 6 anschließenden Rauchgas-Abführungsraum 85 mit Abgas-Abführungsöffnung 83 mündende Bypass-Rohrleitung 8 mit in ihrem, vom Rauchrohr-Verbindungsraum 7 ausgehenden - hier aufsteigenden - Rohrast 81 eingebauter Bypass-Sperrklappe 71.

An die Verbindungsraum-Trennwand 75 im Rauchrohr-Verbindungsraum 7 ist wärmetauscherseitig eine entweder in die - die dortige Verbrennungsgas-Direktführungsöffnung 67 gasdicht schließende und so die Führung der Verbrennungsgase 50 vom ersten Rohrzug 61 durch den Rauchrohr-Verbindungsraum 7 und über den in demselben angeordneten Rohr-Verdampfer 90 in den zweiten Rohrzug 62 oder gleich in die Bypass-Rohrleitung 8 gewährleistende - Trennwands-Verbindungsposition A zur Rohrbündel-Trennwand 65 des Rohrbündelkörpers 60 hin oder aber in die die Führung der Verbrennungsgase 50 vom ersten Rohrzug 61 durch den gesamten Rauchrohr-Verbindungsraum 7 und über den sich in demselben befindlichen Rohr-Verdampfer 90 verhindernde und so deren Führung durch die geöffnete Verbrennungsgas-Direktführungsöffnung 67 direkt in und durch die Bypass-Rohrleitung 8 gewährleistende Sperrposition B verschwenkbare Zweiwege-Sperrklappe 70 angelenkt ist.

Durch Pfeile ist der Weg der Verbrennungsgase 50 im Verbrennungsofen 1 und durch die erfindungsgemäße Hitze- und Wärmerückgewinnungseinrichtung 6' angedeutet.

Die Zweiwege-Sperrklappe 70 ist im in der Fig. 2 gezeigten Volllast-, d.h. Strom- plus Wärmegewinnungsmodus, in die die Rohrbündel-Trennwand 65 und die Verbindungsraum-Trennwand 75 miteinander verbindende und in dieser Stellung die Verbrennungsgas-Direktführungsöffnung 67 verschließende Trennwand-Verbindungsposition A gebracht.

Die heißen Verbrennungsgase 50 durchströmen den ersten Rohrzug 61, durchfließen danach den gesamten Rauchrohr-Verbindungsraum 7 und umströmen den dort positionierten Rohr-Verdampfer 90, der eine außerhalb angeordnete und in der Figur 2 nicht näher gezeigte Turbine mit Stromgenerator 95, z.B. mit überhitztem Dampf, versorgt.

Danach verlassen die Verbrennungsgase 50 den Rauchrohr-Verbindungsraum 7 und gelangen, da die Bypass-Sperrklappe 71 im aufsteigenden Rohrast 81 des Bypass-Rohrs 8 geschlossen gehalten ist, durch den zweiten Rohrzug 62, in welchem sie ihre Restwärme abgeben, in den Rauchgas-Abführungsraum 85 und von dort in und durch die Abgas-Abführungsöffnung 83 nach außen.

Die Fig. 2 zeigt weiters den speziellen, im Wesentlichen kastenförmigen Verbrennungsofen 1 mit zwei Brennräumen 4, 5 für eine wie erfindungsgemäß angestrebte, möglichst effektive Verbrennung auch von gegebenenfalls relativ geringe Anteile an brennbaren Substanzen enthaltendem Material 10, wobei die Darstellung einen derartigen Ofen näher erläutert, welcher aber nicht eigentlicher Gegenstand der vorliegenden Erfindung ist.

Im Innenraum dieses Ofens 1 ist ein schräg aufsteigender, in Richtung tr materialtransportierender Treppenrost 2 angeordnet, welcher das auf ihn aufgegebene, brennbare Material 10, z.B. Hühnermist, langsam im Brennraum 4 in Richtung tr nach aufwärts transportiert. Von an den Treppenrost 2 von unterhalb desselben herangeführten, hier z.B. drei Luftzuführdüseneinheiten 31 wird Primär-Verbrennungsluft 3 durch den Rost 2 und durch das von demselben bewegte, brennende Material 10 eingeblasen und zwar in von Luftzufuhrdüsen 31 zu Luftzufuhrdüsen 33 absteigenden Kubikmeter-Mengen pro Stunde.

Durch die in Rostbewegungsrichtung tr den Düsen 31 folgenden beiden Düsen 32, 33 wird Sekundär-Verbrennungsluft durch den Rost 2 und die sich darauf befindende, letztlich nur mehr geringe Mengen brennbare Substanz, also praktisch wenig oder keine organischen Bestandteile mehr enthaltende, Asche eingeblasen.

Die aus dem Brennmaterial 10 freigesetzten Verbrennungsgase 50 strömen in den sich erweiternden Primär-Verbrennungsraum 4 zwischen dem schräg aufwärts ansteigenden Transport-Rost 2 und der stärker schräg als der Transport-Rost 2 schräg nach oben ausgerichteten Verbrennungsraum-Trennwand 45 in Richtung +TR nach oben und gelangen durch die von der eben genannten Trennwand 45 frei gelassene Öffnung 54 in den sich schräg nach abwärts hin erweiternden Sekundär-Verbrennungsraum 5 mit einer durch die Verbrennungsraum-Trennwand 45 gebildeten, schräg abwärts verlaufenden Art Boden mit Brennsteinen 450, wo sich die Gase in negativer Richtung -TR schräg abwärts weiter bewegen.

Die heißen Verbrennungsgase 50 verlassen - die Schikane 11 unterseitig umgehend - schließlich den Sekundär-Verbrennungsraum 5 durch die Gas-Abführungsöffnung 101 des Verbrennungsofens 1 und gelangen in die erfindungsgemäße, wie oben beschriebene, horizontal angeordnete Hitze- bzw. Wärmerückgewinnungseinrichtung 6'.

Die Fig. 3 zeigt - bei sonst gleichbleibenden Bezugszeichenbedeutungen - die Verfahrensweise, wenn die Temperatur und der Energieinhalt der Verbrennungsgase 50 in einem mittleren Bereich liegen, also im Zweidrittellast-, d.h. Strom- und Teil-Wärmegewinnungsmodus.

Hierbei führt der Weg der aus dem Verbrennungsofen 1 kommenden, heißen Verbrennungsgase 50 zuerst durch den ersten Rohrzug 61 des Rohrwärmetauschers 6, dann bei mittels der Zweiwege-Sperrklappe 70 weiterhin geschlossen gehaltener Verbrennungsgas-Direktführungsöffnung 67 durch den gesamten Rauchrohr-Verbindungsraum 7 und somit auch über den Rohr-Verdampfer 90, dann jedoch bei geöffneter Bypass-Sperrklappe 71 im Rohrast 81 der Bypass-Rohrleitung 8 gleich durch dieselbe, also durch den Rohrast 82, und durch den Rauchgas-Abführungsraum 85 und die Abgas-Abführungsöffnung 83 nach außen.

Die Fig. 4 zeigt - bei sonst gleichbleibenden Bezugszeichenbedeutungen - den Weg der aus dem Verbrennungsofen 1 kommenden Verbrennungsgase 50 im Drittellast-, d.h. nur Teil-Wärmegewinnungsmodus.

Hierbei ist die Verbrennungsgas-Direktführungsöffnung 67 im Rauchrohr-Verbindungsraum 7 geöffnet, hingegen ist die Bypass-Sperrklappe 71 geschlossen und die zuerst den ersten Rohrzug 61 des Wärmetauschers 6 durchströmenden Verbrennungsgase 50 gelangen über den kürzesten Weg durch den Rauchrohr-Verbindungsraum 7 in und durch den zweiten Rohrzug 62 und den daran anschließenden Rauchgas-Abführungsraum 85 und durch die Abgas-Abführungsöffnung 83 nach außen.

## Patentansprüche

1. Anlage (100) für die Verbrennung von brennbaren, Kohlenstoff enthaltenden, gegebenenfalls biologischen, Materialien (10) und für die Rückgewinnung der dabei generierten Hitzeenergie aus den Verbrennungsgasen mit einem mit den genannten Materialien zu versorgenden Verbrennungsofen mit Zufuhr von Verbrennungsluft und an denselben angeschlossener Führung der heißen Verbrennungsgase (50) in und durch eine Hitze- bzw. Wärmerückgewinnungseinrichtung (6'),
- welche mit einem Rohrwärmetauscher (6) gebildet ist, welcher einen durch eine Rohrbündel-Trennwand (65) in zwei Rohrzüge (61, 62), insbesondere längs, geteilten Rohrbündelkörper (60) mit von den direkt aus dem Verbrennungsofen (1) abströmenden heißen Verbrennungsgasen (50) nacheinander durchströmbarem erstem und zweitem Rohrzug (61, 62) und einen direkt an den Rohrbündelkörper (60) anschließenden und die beiden Rohrzüge (61, 62) miteinander verbindendem Rauchrohr-Verbindungsraum (7) mit denselben teilender Verbindungsraum-Trennwand (75), und einem in demselben angeordneten, vorzugsweise an eine außerhalb des Rohrwärmetauschers (6) angeordnete Turbine mit Stromgenerator (95) angeschlossenen, Rohr-Verdampfer (90) aufweist,
- wobei die Hitze- und Wärmerückgewinnungseinrichtung (6') weiters eine vom Rauchrohr-Verbindungsraum (7) ausgehende und in einen ausgangsseitig nur an den zweiten Rohrzug (62) des Rohrwärmetauschers (6) anschließenden Rauchgas-Abführungsraum (85) mit Abgas-Abführungsöffnung (83) mündende Zweit-Rohrzugs(62)umgehungs- bzw. Bypass-Rohrleitung (8) mit in ihrem, vom Rauchrohr-Verbindungsraum (7) ausgehenden Rohrast (81) eingebauter, öffen- oder schließbarer Bypass-Sperrklappe (71), aufweist und
- wobei an die Verbindungsraum-Trennwand (75) im Rauchrohr-Verbindungsraum (7) wärmetauscherseitig eine
- entweder in eine die dortige Verbrennungsgas-Direktführungsöffnung (67) im Wesentlichen gasdicht schließende und damit die Führung der Verbrennungsgase (50)
- aus dem ersten Rohrzug (61) durch den gesamten Rauchrohr-Verbindungsraum (7) und jedenfalls über den in demselben angeordneten Rohr-Verdampfer (90) in den zweiten Rohrzug (62) oder in die Bypass-Rohrleitung (8) gewährleistende Trennwands-Verbindungsposition (A) zur Rohrbündel-Trennwand (65) des Rohrwärmetauschers (6) hin
- oder in eine die Führung der Verbrennungsgase (50) vom ersten Rohrzug (61) durch den gesamten Rauchrohr-Verbindungsraum (7) und über den sich dort befindlichen Rohr-Verdampfer (90) verhindernde und somit deren Führung gleich durch die geöffnete Verbrennungsgas-Direktführungsöffnung (67) direkt in und durch die Bypass-Rohrleitung (81) oder in und durch den zweiten Rohrzug (62) gewährleistende Sperrposition (B) verschwenkbare Zweiwege-Sperrklappe (70) angelenkt ist.

2. Anlage (100) nach Anspruch 1, wobei der Verbrennungsofen (1) eine Haupt- (4) und daran anschließend eine Nach-Verbrennungskammer (5) aufweist und eine stufenweise Zufuhr von Primär- und Sekundärluft (3) durch einen Transportrost (2), vorgesehen ist, wobei
- die Hitze- bzw. Wärmerückgewinnungseinrichtung (6') bzw. deren Rohrwärmetauscher (6) direkt an der Decke (10) des Verbrennungsofens (1) anliegt oder selbst einen Teil derselben bildet und dessen Rauchrohr-Verbindungsraum (7) einen nach abwärts gerichteten, mit Asche- und/oder Staubaustragungseinheit (91) ausgestatteten, konischen Unterteil (9) aufweist, und
- wobei weiters vorgesehen ist,
- dass als Verbrennungsofen (1) ein solcher eingesetzt ist, in dessen räumlich schräg nach oben sich erweiternder Hauptbrennkammer (4) in bzw. durch das auf dem Transport-Rost (2) in dessen Bewegungsrichtung (tr) geförderte, insbesondere organische, Brenngut (10) über eine Mehrzahl von in Bewegungsrichtung (tr) desselben hintereinander angeordneten Luftzufuhr-Öffnungen oder -Düsen (31, 32, 33) Primär-Verbrennungsluft (3) mit jeweils in Bewegungsrichtung (tr) des Transportrostes (2) abnehmender Intensität und über in Bewegungsrichtung (tr) denselben folgende, zumindest zwei, hintereinander angeordnete derartige Öffnungen oder Düsen (31', 32') Sekundär-Verbrennungsluft (3') zuführbar ist,
- dass die hierbei gebildeten heißen Verbrennungsgase (50) über eine - von einer stärker schräg als der Transport-Rost (2) nach aufwärts gerichteten, die Hauptverbrennungskammer (4) nach oben hin begrenzenden Trennwand (45) aus bzw. mit auf derselben abgelegten Brennraum-Umluftsteinen (450) freigelassene - erste Durchgangs- und Gasumlenkungszone (54)
- in zur vorherigen Bewegungsrichtung (+TR) im Wesentlichen inverser Richtung (-TR) in und durch die von den eben genannten Trennwand (45) bzw. deren Umluftsteinen (450) nach unten zur Hauptverbrennungskammer (4) hin begrenzte, sich in aktueller Verbrennungsgas-Bewegungsrichtung (-TR) ebenfalls räumlich erweiternde Nachverbrennungskammer (5) leitbar sind,
- innerhalb welcher die heißen Verbrennungsgase (50) durch eine zwischen einer abwärts gerichteten Schikane (11) und den Brennraum-Umluftsteinen (450) gebildete, eine zweite Durchgangs- und Gasumlenkungszone bildende Verengungsöffnung (55) hindurch nach aufwärts hin umgelenkt, in und durch die genannte Hitze- bzw. Wärmerückgewinnungseinrichtung (6) führbar sind.

3. Verfahren zur Rückgewinnung der den aus einem Verbrennungsofen (1) abströmenden Verbrennungsgasen (50) innewohnenden Wärmeenergie in einem Volllast-, d.h. Strom- plus Vollwärmegewinnungsmodus mittels der Hitze- bzw. Wärmerückgewinnungseinrichtung (6'),
- wobei die Rohrzugs(61, 62)-Trennwand (65) und die Verbindungsraum-Trennwand (75) unter Verschließung der Verbrennungsgas-Direktführungsöffnung (67) im Rauchrohr-Verbindungsraum (7) miteinander verbindender - Stellung der Zweiwege-Sperrklappe (70), in Position A und bei gleichzeitig geschlossener Bypass-Sperrklappe (71) in der Bypass-Rohrleitung (8)
- sowohl der erste Rohrzug (61) als auch der gesamte Rauchrohr-Verbindungsraum (7) und der dort angeordnete Rohr-Verdampfer (90) sowie der zweite Rohrzug (62) nacheinander von den aus dem Verbrennungsofen (1) kommenden heißen Verbrennungsgasen (50) durch- bzw. überströmt werden, und
- wobei die Abgase nach Durchströmen des an den zweiten Wärmetauscher-Rohrzug (62) anschließenden Rauchgas-Abzugsraums (85) durch dessen Abgas-Abführungsöffnung (83), abgeführt bzw. beispielsweise einer Abgasreinigungsanlage zugeführt werden.

4. Verfahren zur Rückgewinnung der aus einem Verbrennungsofen (1) abströmenden Verbrennungsgasen (50) innewohnenden Wärmeenergie in einem Zweidrittellast-, d.h. Strom- plus Teil-Wärmegewinnungsmodus mittels der Hitze- bzw. Wärmerückgewinnungseinrichtung (6'),
- wobei die Rohrbündel-Trennwand (65) und die Verbindungsraum-Trennwand (75) unter Verschließung der Verbrennungsgas-Direktführungsöffnung (67) im Rauchrohr-Verbindungsraum (7) miteinander verbindender Stellung der Zweiwege-Sperrklappe (70), in Position A und bei geöffneter Bypass-Sperrklappe (71) des Bypassrohrs (8)
- nur der erste Wärmetauscher-Rohrzug (61) und danach nur mehr der gesamte Rauchrohr- Verbindungsraum (7) und der dort angeordnete Rohr-Verdampfer (90) von den aus dem Verbrennungsofen (1) abströmenden, heißen Verbrennungsgasen (50) durch- bzw. überströmt werden, wonach dieselben bei geöffneter Bypass-Sperrklappe (71) nur mehr in und durch die Bypass-Rohrleitung (8) und durch den Rauchgas-Abführungsraum (85) und dessen Abgas-Abführungsöffnung (83) geführt bzw. abgeführt werden.

5. Verfahren zur Rückgewinnung der den Verbrennungsgasen (50) aus einem Verbrennungsofen (1) innewohnenden Wärmeenergie in einem Drittellast-, d.h. nur Teil-Wärmegewinnungsmodus mittels der Hitze- bzw. Wärmerückgewinnungseinrichtung (6'), - wobei - nach Abschwenken der Zweiwege-Sperrklappe (70), in Position B geöffneter Verbrennungsgas-Direktführungsöffnung (67) und in Folge der dadurch eintretenden Verhinderung der Führung der Verbrennungsgase (50) durch den gesamten Rauchrohr-Verbindungsraum (7) und über den in demselben angeordneten Rohr-Verdampfer (90) und bei gleichzeitig geschlossener Bypass-Sperrklappe (71) die aus dem Verbrennungsofen (1) abströmenden, heißen Verbrennungsgase (50) nur sowohl durch den ersten Wärmetauscher-Rohrzug (61) als auch durch den zweiten Wärmetauscher-Rohrzug (62) sowie letztlich durch den Rauchgas-Abführungsraum (83) und dessen Abgas-Abführungsöffnung (85) geführt bzw. abgeführt werden.

## Claims

1. Plant (100) for the combustion of combustible, carbon-containing, optionally biological materials (10) and for the recovery of the thermal energy thereby generated from the combustion gases having a combustion oven to be supplied with the mentioned materials with a supply of combustion air and having a guiding device, attached to said combustion oven, for guiding the hot combustion gases (50) into and through a heat or warmth recovery device (6'),
- which is formed having a pipe heat exchanger (6) which has a pipe bundle body (60) divided, in particular lengthwise, by a pipe bundle partition wall (65) into two pipe pullers (61, 62) having first and second pipe puller (61, 62) able to be flowed through one after the other by the hot combustion gases (50) flowing directly out of the combustion oven (1), and a flue pipe connecting space (7), connecting directly to the pipe bundle body (60) and connecting the two pipe pullers (61, 62) with one another, having connecting space partition wall (75) partitioning the same, and a pipe evaporator (90) disposed in the same, preferably connected with a turbine, with electricity generator (95), disposed externally to the pipe heat exchanger (6),
- wherein the heat and warmth recovery device (6') furthermore has a second pipe puller (62) bypass pipeline (8) leading off from the flue pipe connecting space (7) and opening into a flue gas discharge space (85), connected on the output side only to the second pipe puller (62) of the pipe heat exchanger (6), having exhaust gas discharge opening (83), having an openable or closable bypass locking flap (71), installed in its pipe branch (81) leading off from the pipe flue connecting space (7), and
- wherein at the connecting space partition wall (75) in the flue pipe connecting space (7) on the heat exchanger side is articulated a two-way locking flap (70) which can be swivelled
- either into a connecting position (A), towards the pipe bundle partition wall (65) of the pipe heat exchanger (6), which closes in a substantially gas tight manner the combustion gas direct guiding opening (67) there and which thus guarantees the guiding of the combustion gases (50)
- out of the first pipe puller (61) through the entire flue pipe connecting space (7) and in any case via the pipe evaporator (90) disposed in the same into the second pipe puller (62) or into the bypass pipeline (8)
- or into a closed position (B) preventing the guiding of the combustion gases (50) from the first pipe puller (61) through the entire pipe flue connecting space (7) and via the pipe evaporator (90) located there, and thus guaranteeing their guidance immediately through the opened combustion gas direct guiding opening (67) directly into and through the bypass pipeline (81) or into and through the second pipe puller (62).

2. Plant (100) according to claim 1, wherein the combustion oven (1) has a main (4) chamber and, connected therewith, a post-combustion chamber (5) and a stepwise supply of primary and secondary air (3) through a transport grill (2) is provided, wherein
- the heat or warmth recovery device (6') or its pipe heat exchanger (6) abuts directly on the roof (10) of the combustion oven (1) or itself forms a part thereof and the flue pipe connecting space (7) of which has a conical lower part (9) oriented downwards, equipped with ash and/or dust discharge unit (91), and
- wherein it is furthermore provided
- that as a combustion oven (1) one such is used, into the main combustion chamber (4) of which, extending spatially obliquely upwards, conveyed into or through the in particular organic combustion material (10), conveyed on the transport grill (2) in its direction of movement (tr) via a plurality of air supply openings or nozzles (31, 32, 33) disposed in the direction of movement (tr) of the same behind one another, can be supplied primary combustion air (3) with intensity reducing respectively in direction of movement (tr) of the transport grill (2) and secondary combustion air (3') via at least two, following the same in direction of movement (tr), such openings or nozzles (31', 32') disposed behind one another,
- that the hot combustion gases (50) formed here can be guided across a - freed by a partition wall (45), oriented more strongly obliquely upwards than the transport grill (2), delimiting the main combustion chamber (4) upwards, made of or having combustion chamber air circulation bricks (450) - first transit and gas-deviating zone (54)
- in the direction (-TR) substantially inverse to the previous direction of movement (+TR) into and through the post-combustion chamber (5), delimited by the above-mentioned partition wall (45) or its air circulation bricks (450) downwards in the direction of the main combustion chamber (4), extending also spatially in actual combustion gas direction of movement (-TR),
- within which the hot combustion gases (50) can be guided through a constriction opening (55) formed between a downwardly oriented chicane (11) and the combustion chamber air circulation bricks (450), forming a second through- and gas-deviating zone, deviated in a downwards direction, into and through the said heat or warmth recovery device (6).

3. Method for the recovery of the thermal energy contained in the combustion gases (50) discharging out of a combustion oven (1) in a full-load mode, i.e. electricity plus full heat generation mode by means of the heat or warmth recovery device (6'),
- wherein the pipe puller (61, 62) partition wall (65) and the connecting space partition wall (75) when closing the combustion gas direct guiding opening (67) in the flue pipe connecting space (7) connecting with one another - position of the two-way locking flap (70), in position A and with simultaneously closed bypass locking flap (71) in the bypass pipeline (8)
- both the first pipe puller (61) as well as the entire flue pipe connecting space (7) and the pipe evaporator (90) disposed there and the second pipe puller (62) are flowed through or flowed over one after the other by the combustion gases (50) coming out of the combustion oven (1), and
- wherein the exhaust gases after flowing through the flue gas discharge space (85) connected to the second heat exchanger pipe puller (62) are discharged through its exhaust gas discharge opening (83) or supplied for example to an exhaust gas purifying plant.

4. Method for the recovery of the thermal energy contained in the combustion gases (50) discharging out of a combustion oven (1) in a two-thirds-load mode, i.e. electricity plus partial heat generation mode by means of the heat or warmth recovery device (6'),
- wherein the pipe bundle partition wall (65) and the connecting space partition wall (75) when closing the combustion gas direct guiding opening (67) in the flue pipe connecting space (7) connecting with one another position of the two-way locking flap (70), in position A and with simultaneously closed bypass locking flap (71) of the bypass pipe (8)
- only the first heat exchanger pipe puller (61) and thereafter only additionally the entire flue pipe connecting space (7) and the pipe evaporator (90) disposed there are flowed through or flowed over by the hot combustion gases (50) flowing out of the combustion oven (1), after which the same hot combustion gases with an opened bypass locking flap (71) are guided or discharged only additionally into and through the bypass pipeline (8) and through the flue gas discharge space (85) and its exhaust gas discharge opening (83).

5. Method for the recovery of the thermal energy contained in the combustion gases (50) discharging out of a combustion oven (1) in a one-third-load mode, i.e. only partial heat generation mode by means of the heat or warmth recovery device (6'),
- wherein - after swivelling the two-way locking flap (70), combustion gas direct guiding opening (67) opened into position B and as a result of the thus occurring prevention of the guiding of the combustion gases (50) through the entire flue pipe connecting space (7) and across the pipe evaporator (90) disposed therein and with a simultaneously closed bypass locking flap (71) the hot combustion gases (50) flowing out of the combustion oven (1) are guided or discharged only both through the first heat exchanger pipe puller (61) as well as through the second heat exchanger pipe puller (62) and finally through the flue gas discharge space (83) and its exhaust gas discharge opening (85).

## Revendications

1. Installation (100) pour la combustion de substances (10) combustibles, contenant du carbone, éventuellement biologiques et pour la récupération de l'énergie thermique ainsi générée à partir des fumées avec un incinérateur à alimenter avec les substances mentionnées, avec apport d'air de combustion et guidage des fumées (50) chaudes connecté à ce dernier dans et à travers l'appareil de récupération de chaleur (6'),
- appareil formé avec un échangeur de chaleur tubulaire (6) présentant un corps de faisceau tubulaire (60) séparé, en particulier dans le sens longitudinal, par une paroi de séparation de faisceau tubulaire (65) en deux conduits (61, 62), avec un premier et second conduit (61, 62) pouvant être parcourus successivement par les fumées (50) s'évacuant directement de l'incinérateur (1), et un espace de connexion (7) de tubes à fumées suivant directement au corps à faisceau tubulaire (60) connectant les deux conduits (61, 62) l'un à l'autre, avec une paroi de séparation de l'espace de connexion (75) divisant ce dernier, et un évaporateur tubulaire (90) disposé dans ce dernier, de préférence raccordé à une turbine à générateur de courant (95) disposée à l'extérieur de l'échangeur de chaleur tubulaire (6),
- l'appareil de récupération de chaleur (6') présentant en outre une tuyauterie de contournement respectivement de dérivation (8) du conduit (62) partant de l'espace de connexion de tubes à fumées (7) et, du côté de la sortie, débouchant dans un espace d'évacuation des fumées (85) avec ouverture d'évacuation des gaz d'échappement (83) connectant uniquement au second conduit (62) de l'échangeur de chaleur (6) avec son clapet de blocage de dérivation (71) ouvrable ou fermable, incorporé dans sa branche de tuyau (81) partant de l'espace de connexion de tubes à fumées (7), et
- dans laquelle, du côté de l'échangeur de chaleur dans l'espace de connexion de tubes à fumées (7) à la paroi de séparation de l'espace de connexion (75), un clapet de blocage à deux voies (70) est articulé
- soit dans une position (A) de connexion de paroi de séparation fermant essentiellement de manière étanche au gaz et assurant ainsi le guidage des fumées (50) de l'ouverture de guidage direct des fumées (67)
- depuis le premier conduit (61) à travers l'ensemble de l'espace de connexion de tubes à fumées (7) et en tout cas par l'évaporateur tubulaire (90) dans le second conduit (62) ou dans le tuyau de dérivation (8) vers la paroi de séparation du faisceau tubulaire (65) de l'échangeur de chaleur (6)
- soit dans une position de blocage (B) empêchant le guidage des fumées (50) depuis le premier conduit (61) à travers la totalité de l'espace de connexion de tubes à fumées (7) et par l'évaporateur (90) s'y trouvant et donc leur guidage de suite par l'ouverture de guidage direct des fumées (67) ouverte directement dans et à travers le tuyau de dérivation (81) ou dans et à travers le second conduit (62) .

2. Installation (100) selon la revendication 1,
dans laquelle l'incinérateur (1) présente une chambre de combustion principale (4) et ensuite une chambre de post-combustion (5) et une alimentation échelonnée d'air primaire et secondaire (3) à travers la grille de transport (2) est prévue, dans laquelle
- l'appareil de récupération de chaleur (6') respectivement son échangeur de chaleur tubulaire (6) reposant directement à la voûte (10) de l'incinérateur (1) ou formant elle-même partie de celui-ci, et dont l'espace de connexion de tubes à fumées (7) présente une partie basse conique (9) dirigée vers le bas, équipée d'une unité de décharge de cendres ou poussières (91), et
- prévoyant en outre
- qu'en tant qu'incinérateur (1) est employé un incinérateur dans la chambre de combustion principale (4) duquel, s'évasant en biais dans l'espace vers le haut, dans ou à travers la charge combustible (10), en particulier organique, transportée sur la grille de transport (2) dans la direction de mouvement (tr), de l'air de combustion secondaire (3') peut être alimentée par une pluralité d'ouvertures ou buses d'alimentation en air (31, 32, 33) disposées l'une après l'autre dans la direction de mouvement (tr) en air de combustion primaire (3) avec une intensité diminuant dans la direction de mouvement (tr) de la grille de transport (2) et par au moins deux de telles ouvertures ou buses (31', 32') suivant dans la direction de mouvement (tr) de ce dernier peut être alimenté,
- que les fumées (50) formées ainsi peuvent être conduites par une première zone de passage et de détournement (54) dirigée vers le haut avec une inclinaison plus forte que la grille de transport (2) laissée libre par une paroi de séparation (45) limitant la chambre principale de combustion (4) vers le haut de respectivement avec des briques de circulation d'air (450) de l'espace de combustion,
- dirigeables dans une direction essentiellement inverse (-TR) à la direction de mouvement précédente (+TR) dans et à travers la chambre de post-combustion (5) limitée vers le bas, vers la chambre principale de combustion (4) par la paroi de séparation (45) mentionnée ci-dessus ou ses briques de circulation d'air (450), s'étendant dans la direction de mouvement des fumées (-TR) en s'étendant également dans l'espace,
- à l'intérieur de laquelle les fumées (50) chaudes sont dirigeables à travers une ouverture de constriction (55) formée entre une chicane (11) dirigée vers le bas et les briques de circulation d'air (450) de l'espace de combustion, formant une seconde zone de passage et de détournement, détournées vers le haut dans et à travers l'appareil de récupération de chaleur (6).

3. Procédé de récupération de l'énergie thermique contenue dans les fumées (50) s'évacuant d'un incinérateur (1) dans un mode à pleine charge, à savoir de récupération de courant et de pleine chaleur au moyen de l'appareil de récupération de chaleur (6'),
- la paroi de séparation (65) de conduit (61, 62) et la paroi de séparation de l'espace de connexion (75), en fermant l'ouverture de guidage direct des fumées (67) dans l'espace de connexion de tubes à fumées (7) avec position du clapet de blocage à deux voies (70) les reliant en position A et clapet de blocage de dérivation (71) fermé simultanément dans le tuyau de dérivation (8)
- aussi bien le premier conduit (61) que l'ensemble de l'espace de connexion de tubes à fumées (7) et l'évaporateur tubulaire (90) y disposé que le second conduit (62) sont traversés ou immergés successivement par les fumées (50) chaudes provenant de l'incinérateur (1), et
- dans lequel, après le passage de l'espace d'évacuation des fumées (85) suivant le second conduit (62) d'échangeur de chaleur étant évacuées par son ouverture d'évacuation d'émanations (83) respectivement alimentées dans une installation d'épuration des émanations.

4. Procédé de récupération de l'énergie thermique contenue dans les fumées (50) s'évacuant d'un incinérateur (1) dans un mode à deux tiers de charge, à savoir un mode de récupération de courant plus chaleur partielle, au moyen de l'appareil de récupération de chaleur (6'),
- la paroi de séparation du faisceau tubulaire (65) et la paroi de séparation de l'espace de connexion (75), en fermant l'ouverture de guidage direct des fumées (67) dans l'espace de connexion de tubes à fumées (7) en position du clapet de blocage à deux voies (70) reliant en position A et le clapet de blocage de dérivation (71) de tuyauterie de dérivation (8) étant ouvert,
- uniquement le premier le conduit (61) d'échangeur de chaleur et ensuite seulement l'ensemble de l'espace de connexion de tubes à fumées (7) et l'évaporateur tubulaire (90) qui y est installé sont traversés respectivement immergés par les fumées (50) chaudes s'évacuant de l'incinérateur (1), après quoi lorsque le clapet de blocage de dérivation (71) est ouvert, ces dernières sont guidées évacuées uniquement dans et à travers le tuyau de dérivation (8) et l'espace d'évacuation des fumées (85) et son ouverture d'évacuation d'émanations (83).

5. Procédé de récupération de l'énergie thermique contenue dans les fumées (50) d'un incinérateur (1) dans un mode uniquement à deux tiers de charge, à savoir uniquement un mode de récupération de chaleur partiel, au moyen de l'appareil de récupération de chaleur (6'),
- dans lequel, après pivotement du clapet de blocage à deux voies (70) en position B ouverte de l'ouverture de guidage direct des fumées (67) et suite à l'empêchement se produisant ainsi du guidage des fumées (50) à travers l'ensemble de l'espace de connexion de tubes à fumées (7) et par l'évaporateur tubulaire (90) disposé dans celui-ci, et avec le clapet de blocage de dérivation (71) fermé simultanément, les fumées (50) chaudes s'évacuant de l'incinérateur (1) sont guidées respectivement évacuées seulement aussi bien par le premier conduit d'échangeur de chaleur (61) que par le second conduit d'échangeur de chaleur (62) ainsi que finalement par l'espace d'évacuation de fumées (83) et son ouverture d'évacuation des fumées (85).
